Europäisches Patentamt

European Patent Office

Office européen des brevets

(11) Veröffentlichungsnummer: **0 374 814 B1**

(12) EUROPÄISCHE PATENTSCHRIFT

(45) Veröffentlichungstag der Patentschrift: **06.04.94**

(21) Anmeldenummer: **89123422.1**

(22) Anmeldetag: **19.12.89**

(51) Int. Cl.⁵: **C08F 285/00**, C08L 51/00, //C08L51:00

(54) **Pfropfpolymerisate.**

(30) Priorität: **23.12.88 DE 3843371**

(43) Veröffentlichungstag der Anmeldung:
**27.06.90 Patentblatt 90/26**

(45) Bekanntmachung des Hinweises auf die
Patenterteilung:
**06.04.94 Patentblatt 94/14**

(84) Benannte Vertragsstaaten:
**BE DE ES FR GB IT NL**

(56) Entgegenhaltungen:
**FR-A- 2 139 458**
**US-A- 3 458 603**
**US-A- 4 145 380**
**US-A- 4 173 600**

(73) Patentinhaber: **BASF Aktiengesellschaft**
**Carl-Bosch-Strasse 38**
**D-67063 Ludwigshafen(DE)**

(72) Erfinder: **Goertz, Hans-Helmut, Dr.**
**Am Wurmberg 11**
**D-6713 Freinsheim(DE)**
Erfinder: **Oschmann, Werner, Dr.**
**Buergermeister-Horlacher-Strasse 44**
**D-6700 Ludwigshafen(DE)**
Erfinder: **Hatzmann, Guenter, Dr.**
**In der Taesch 23**
**D-6906 Leimen(DE)**

**Beschreibung**

Die vorliegende Erfindung betrifft Pfropfpolymerisate, erhältlich durch

A. Emulsionspolymerisation von 5-20 Gew.-% eines Monomerengemischs bestehend aus

$a_1$) 80-100 Gew.-% Styrol oder dessen kernsubstituierten Derivaten (Monomere I)

$a_2$) 0- 20 Gew.-% eines $C_1$-$C_{12}$-Alkylesters der Acrylsäure oder der Methacrylsäure oder eines $\alpha,\beta$-ungesättigten Nitrils (Monomere II)

$a_3$) 0-10 Gew.-% eines bi- oder polyfunktionellen Monomeren (Monomere III) und

$a_4$) 0- 5 Gew.-% weiterer radikalisch polymerisierbarer Monomere (Monomere IV),

wobei sich die Gew.-% $a_1$) - $a_4$) auf die Gesamtmenge (= 100 %) der in Stufe A) eingesetzten Monomere beziehen,

mit der Maßgabe, daß der mittlere Teilchendurchmesser der so erzeugten Latexteilchen 50 nm nicht überschreitet,

B. anschließende Pfropfpolymerisation von 35-65 Gew.-% eines Monomerengemischs aus

$b_1$) 75-90 Gew.-% eines konjugierten Diens (Monomere V)

$b_2$) 10-25 Gew.-% der Monomeren I und/oder II

$b_3$) 0-10 Gew.-% der Monomeren III und

$b_4$) 0-5 Gew.-% der Monomeren IV,

wobei sich die Gew.-% $b_1$) - $b_4$) auf die Gesamtmenge (= 100 %) der in Stufe B) eingesetzten Monomere beziehen.

C. anschließende Pfropfpolymerisation von:

C/2: 30-50 Gew.-% eines Monomerengemischs aus

$c_1$) 35-65 Gew.-% der Monomeren I

$c_2$) 10-25 Gew.-% eines $\alpha,\beta$-ungesättigten Nitrils (Monomere IIc)

$c_3$) 25-50 Gew.-% mindestens je eines Monomers aus der Gruppe der $C_1$-$C_{12}$-Alkylester der Acrylsäure (Monomere IIa) und eines Monomers aus der Gruppe der $C_1$-$C_{12}$-Alkylester der Methacrylsäure (Monomere IIb)

$c_4$) 0-10 Gew.-% der Monomeren III,

wobei sich die Gew.-% $c_1$)-$c_4$) auf die Gesamtmenge (= 100 %) der in C/2) eingesetzten Monomere bezieht

oder

C/2: 30-50 Gew.-% eines Monomerengemischs aus

$c_5$) 35-65 Gew.-% Monomere I

$c_6$) 10-25 Gew.-% Monomere IIc)

$c_7$) 15-40 Gew.-% mindestens je eines Monomers IIa und IIb

$c_8$) 0-10 Gew.-% eines Monomers III

in der 1. Stufe und

$c_9$) 5-25 Gew.-% eines Monomers IIb, sowie

$c_{10}$) 0- 2 Gew.-% Monomere III

in der 2. Stufe,

wobei sich die Gew.-% $c_5$)-$c_{10}$) auf die Gesamtmenge (= 100 %) der in C/2) eingesetzten Monomere bezieht.

Weiterhin betrifft die Erfindung Verfahren zur Herstellung dieser Pfropfpolymerisate, sowie ihre Verwendung als Zusatzstoffe zur Verbesserung der mechanischen Eigenschaften von Harzmassen insbesondere aus Homo- oder Mischpolymerisaten des Vinylchlorids, welche die erfindungsgemäßen Pfropfpolymerisate enthalten.

Um die Anwendungsbreite von Polyvinylchloridharzmassen zu erweitern, werden ihnen Modifizierungsmittel zugesetzt, die Verbesserungen bezüglich der Schlagzähigkeit bewirken sollen.

In der CA-A 762012 werden Pfropfpolymerisate beschrieben, bei denen auf einen Kern aus einem Styrol/Butadien-Copolymeren eine Hülle aus Styrol, Acrylnitril und einem oder mehreren Acrylsäureestern aufgepfropft ist. Ähnliche Pfropfpolymerisate werden in der DE-A 1794162 beschrieben.

Nach der Lehre der DE-A 2130989 erhält man dreistufige Pfropfpolymerisate, indem man auf einen überwiegend aus Polystyrol bestehenden harten Kern eine Hülle aus einem Dienkautschuk aufpfropft, woran sich eine weitere Pfropfpolymerisation mit Alkylmethacrylaten anschließt. Pfropfpolymerisate mit vergleichbaren Aufbau werden auch in der DE-A 2244519 und der US-A 4064197 beschrieben.

Weiterhin sind aus der EP-A 50848 dreistufige Pfropfpolymerisate mit verbessertem Weißbruchverhalten bekannt, in denen ein Kern aus einem Styrol-Butadien-Copolymerisat von einer Butadien-Kautschukhülle umgeben ist, worauf eine weitere Hülle aus Acrylaten, Methacrylaten und Acrylnitril aufgepfropft ist.

Alle bisher beschriebenen Pfropfpolymerisate lassen sich als Modifizierungsmittel für thermoplastische Formmassen aus Polyvinylhalogeniden verwenden. Nachteilig an den so erhaltenen Formmassen ist jedoch, daß sie in ihren optischen Eigenschaften zu wünschen übrig lassen, sei es wegen zu hoher Streulichtanteile oder einer unerwünschten Opaleszenz.

Aufgabe der vorliegenden Erfindung war es, diesen Mängeln abzuhelfen.

Demgemäß wurden die eingangs definierten Pfropfpolymerisate gefunden.

Weiterhin wurden die hierdurch definierten Verfahren zu ihrer Herstellung gefunden, sowie ihre Verwendung als Modifizierungsmittel in thermoplastischen Formmassen aus Vinylchloridpolymeren. Die erfindungsgemäßen Pfropfpolymerisate sind über die Stufen A) - C) erhältlich und unterscheiden sich etwas, je nachdem, welche Variante von C) angewandt wird.

Die folgenden Vorschriften und Empfehlungen betreffen die einzelnen Stufen.

Stufe A:

Als Monomere I eignen sich vor allem Styrol, sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol. Es ist auch möglich ein Gemisch verschiedener Monomere I einzusetzen. Die Menge an den Monomeren I beträgt 80-100 Gew.-%, vorzugsweise 85-99,5 Gew.%, bezogen auf die Gesamtmenge an Monomeren in der Stufe A).

Als Monomere II eignen sich $C_1$-$C_{12}$-Alkylester der Acrylsäure (IIa) oder Methacrylsäure (IIb) oder $\alpha,\beta$-ungesättigte Nitrile (IIc).

Als Acrylate kommen beispielsweise Methylacrylat, Ethylacrylat, Propylacrylat, Isopropylacrylat, die isomeren Butylacrylate, Hexylacrylat, Octylacrylat, 2-Ethylhexylacrylat, Laurylacrylat, als Methacrylate Methylmethacrylat, Ethylmethacrylat, Propyl- und Isopropylmethacrylat, die isomeren Butylacrylate, Hexylmethacrylat, Octylmethacrylat und Laurylmethacrylat, vorzugsweise Butylacrylat, 2-Ethylhexylacrylat und Methylmethacrylat in Betracht. Als $\alpha,\beta$-ungesättigte Nitrile eignen sich vorzugsweise Acrylnitril, aber auch Methacrylnitril.

Die Menge an Monomeren II kann bis zu 20, vorzugsweise bis zu 14,5 Gew.-%, betragen.

Zusätzlich können noch bis zu 10, vorzugsweise 0,5-6 Gew.-% einer bi- oder polyfunktionellen Verbindung (Monomere III) copolymerisiert werden, beispielsweise Allyl- und Vinylester von Di-, Tri- oder höheren Carbon-Säuren wie z.B. Adipinsäuredivinylester, Phthalsäurediallylester, Maleinsäurediallylester, Fumarsäurerediallylester; Allyl- und Vinylether mehrfunktioneller Alkohole wie Ethylenglykoldivinylether, 1,3-Butandioldivinylether, 1,4-Butandioldivinylether, Pentaerythrittriallylether oder Veresterungsprodukte von Acrylsäure oder Methacrylsäure mit mehrfunktionellen Alkoholen wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi-(meth)acrylat, Oligo- oder Polyethylenglykoldi(meth)acrylat;Divinylbenzol oder Mischungen der genannten Substanzen, vorzugsweise Divinylbenzol sowie 1,3-Butandioldi(meth)acrylat und 1,4-Butandioldi(meth)-acrylat.

Daneben können noch bis zu 5 Gew.-% weiterer radikalisch polymerisierbarer Monomere copolymerisiert werden.

Die Emulsionspolymerisation kann unter den für Emulsionspolymerisationen üblichen Bedingungen der radikalischen Polymerisation durchgeführt werden.

Als Initiatoren können wasserlösliche thermisch zerfallende Initiatoren oder Redoxsysteme eingesetzt werden. Geeignete thermisch zerfallende Initiatoren (Radikalstarter) sind beispielsweise Natrium-, Kalium- oder Ammoniumpersulfat sowie das Natriumsalz der 4,4'-Azo-bis-(4,4'-cyanopentansäure). Als Redoxsysteme kommen beispielsweise Cumolhydroperoxid, Diisopropylbenzolhydroperoxid, t-Butylhydroperoxid, t-Butylperacetat in Kombination mit Reduktionsmitteln wie Natriumformaldehydsulfoxylat oder Ascorbinsäure in Betracht.

Die Polymerisationstemperatur liegt im allgemeinen zwischen 10-120°C, vorzugsweise zwischen 30-100°C.

Als Emulgatoren eignen sich anionische Emulgatoren, beispielsweise die Alkali- oder Ammoniumsalze von aliphatischen Carbonsäuren, Alkylbenzolsulfonaten, Alkylsulfonaten, Alkylsulfaten oder Sulfonaten alkylierter Diphenylether, wobei der Alkylrest bevorzugt eine Kettenlänge von 8-20 C-Atomen hat, aber geeignet sind auch kationische Emulgatoren wie quaternäre Alkyl-Ammoniumsalze mit langkettigen Alkylresten, sowie nichtionische Emulgatoren wie beispielsweise Poly(oxy)ethylennonylphenylether.

Außerdem können noch Molgewichtsregler zugesetzt werden. Als Molgewichtsregler kommen aliphatische und aromatische Mercaptane wie Thiophenol oder t-Dodecylmercaptane in Betracht.

3

Man kann die Polymerisation bei 1-3 bar vornehmen. Vorzugsweise wendet man eine diskontinuierliche Fahrweise an, aber es ist auch möglich, bei kontinuierlicher Fahrweise, beispielsweise in einer Rührkesselkaskade, zu arbeiten.

Durch die dem Fachmann vertraute Wahl von an sich bekannten geeigneten Reaktionsbedingungen, insbesondere der Emulgatorkonzentration, kann man erreichen, daß der mittlere Teilchendurchmesser des in Stufe A gebildeten Latex 50 nm nicht überschreitet. Geeignete Emulgatorkonzentrationen können in bekannter Weise ermittelt werden.

Stufe B:

Als Monomere V eignen sich konjugierte Alkadiene mit 4-6 C-Atomen wie Butadien, Isopren und Chloropren. Die Menge an V beträgt 75-90, vorzugsweise 78-85 Gew.-%, bezogen auf eine Gesamtmenge der in Stufe B, eingesetzten Monomeren.

Die Menge an den Monomeren I und/oder Monomeren II wird so bemessen, daß sie 10-25, vorzugsweise 15-22 Gew.-% der Gesamtmenge der in Stufe B eingesetzten Monomeren beträgt. Bevorzugt verwendet man Styrol, aber auch Acrylnitril, Methacrylnitril oder $C_1$-$C_{12}$-Alkylacrylate oder $C_1$-$C_{12}$-Alkylmethacrylate.

Zusätzlich können noch bis zu 10, vorzugsweise bis 3 Gew.-% an Monomer III copolymerisiert werden. Außerdem lassen sich noch bis zu 5 Gew.-% Monomere IV einsetzen.

Der Druck kann bei der Polymerisation bis zu 20 bar betragen. Im übrigen kann man die Polymerisation unter den in Stufe A geschilderten Bedingungen vornehmen.

Die so erhaltenen Polymerisate haben einen Brechungsindex im Bereich von $n_D^{20}$ = 1,53-1,545, wie es meistens erwünscht ist und wie man sie in der Regel erhält.

Stufe C:

Anschließend erfolgt je nach Variante C/1 oder C/2 eine ein- oder zweistufige Pfropfpolymerisation in Gegenwart des in Stufe B) erhaltenen Latex.

Variante C/1:

Als Monomere I kommen die unter Stufe A) genannten Verbindungen in Betracht. Es können auch Gemische dieser Monomeren verwendet werden. Die Menge an I wird so bemessen, daß sie 35-65, vorzugsweise 40-60 Gew.-% der Gesamtmenge der in C/1 eingesetzten Monomeren beträgt.

Als Monomere II c) eignen sich ebenfalls die unter A) beschriebenen Verbindungen. Die Menge an II c) beträgt 10-25, vorzugsweise 12-20 Gew.-%, bezogen auf die Gesamtmenge der in C/1 eingesetzten Monomeren.

Geeignete Monomere II a) und II b) sind unter Stufe A) beschrieben. Es werden mindestens je ein Monomeres aus der Gruppe der $C_1$-$C_{12}$-Alkylacrylate und mindestens je ein Monomeres aus der Gruppe der $C_1$-$C_{12}$-Alkyl-Methacrylate eingesetzt. Die Menge an II a) und II b) zusammen beträgt 25-50 Gew.-%, vorzugsweise 30-45 Gew.-%, der Gesamtmenge der in Variante C/1 eingesetzten Monomeren, wobei mindestens 15 Gew.-% an Acrylat und mindestens 10 Gew.-% an Methacrylat eingesetzt werden.

Zusätzlich können noch bis zu 10 Gew.-% eines Monomeren III copolymerisiert werden.

Variante C/2:

In dieser Variante wird eine zweistufige Pfropfpolymerisation in Gegenwart der Polymerisationsemulsion B) durchgeführt.

In der ersten Stufe werden 35-65 Gew.-% Monomere I, 10-25 Gew.-% Monomere II c) und 15-40 Gew.-% mindestens je eines Monomerens II a) und eines Monomeren II b) copolymerisiert. Geeignete Monomere sind unter A) beschrieben. Zusätzlich können bis zu 10 Gew.-% Monomere III copolymerisiert werden.

In der zweiten Stufe werden 5-25, vorzugsweise 10-15 Gew.-%, bezogen auf die Gesamtmenge der in C/2 eingesetzten Monomeren, eines $C_1$-$C_{12}$-Alkylesters der Methacrylsäure, vorzugsweise Methylmethacrylat, aufgepfropft.

Zusätzlich können bis zu 2 Gew.-% Monomere III copolymerisiert werden.

Die Polymerisationsstufen können unter den für Stufe (A) geschilderten Bedingungen vorgenommen werden.

Die Aufarbeitung des Polymerlatex erfolgt nach üblichen Verfahren z.B. durch Sprühtrocknung oder durch Koagulation und Trocknung.

EP 0 374 814 B1

Die erfindungsgemäßen Pfropfpolymerisate haben einen Brechungsindex im Bereich von $n_D^{20}$ = 1.53-1.545, wie es meistens erwünscht ist und wie man sie in der Regel erhält.

Die Herstellung der Polyvinylchloridformmassen kann nach bekannten Verfahren erfolgen. Es kommen sowohl Homopolymere des Vinylchlorids als auch Copolymere mit bis zu 20 % an Comonomeren wie Ethylen, Propylen, Styrol, Vinylacetat und andere Vinylester, Vinylidenchlorid, Acrylnitril, Vinylether, Acryl- und Methacrylester in Betracht.

Die thermoplastischen Formmassen können neben den 2-30 % des erfindungsgemäßen Pfropfpolymerisats die üblichen Stabilisatoren, Hilfsmittel und Farbstoffe enthalten.

Die erfindungsgemäßen thermoplastischen Formmassen weisen eine ausgezeichnete Transparenz und Schlagzähigkeit auf und sind praktisch nicht opaleszierend.

Beispiel 1

Eine Mischung aus 49 kg Wasser, 0,6 kg Emulgator (einem Gemisch von Allylsulfonaten mit einer mittleren Kettenlänge von 14 C-Atomen), 0,005 kg Natriumpyrophosphat, 0,02 kg Natriumbicarbonat, 8,6 kg Styrol und 0,17 kg Butandiol-1,4-diacrylat wurde unter Rühren auf 75 °C erhitzt und dann mit 0,72 kg einer 7 gew.-%igen wäßrigen Lösung von Natriumpersulfat versetzt. Anschließend wurde das Polymerisationsgemisch 2 Stunden lang bei 80 °C gehalten.

Danach wurden 25 Gew.-% einer Mischung bestehend aus 43,5 kg Wasser, 0,44 kg Emulgator (s.o.), 0,024 kg Natriumpyrophosphat, 0,1 kg Natriumbicarbonat, 9,3 kg Styrol, 0,5 kg Butandiol-1,4-diacrylat und 41,4 kg Butadien zu dem bereits vorhandenen Latex gegeben, sowie 0,72 kg einer 7 gew.-%igen wäßrigen Lösung von Natriumpersulfat. Anschließend wurde 15 min. lang bei 80 °C polymerisiert. Dann wurden die restlichen 75 Gew.-% der oben beschriebenen Mischung zusammen mit 1,92 kg einer 7 gew.-%igen wäßrigen Lösung von Natriumpersulfat bei 80 °C innerhalb von 6 Stunden zugegeben.

Das Polymerisationsgemisch wurde weitere 4 Stunden bei 80 °C gehalten und mit 1,2 kg einer 7 gew.-%igen wäßrigen Lösung von Natriumpersulfat versetzt. Dann wurde innerhalb von 2 Stunden eine Mischung aus 17,5 kg Styrol` 6,0 kg Acrylnitril, 9,1 kg Butylacrylat, 2,1 kg Methylmethacrylat und 0,35 kg Butandiol-1,4-diacrylat zugegeben. Anschließend wurde 2 Stunden lang bei 80 °C polymerisiert und dann mit 0,24 kg einer 7 gew.-%igen wäßrigen Lösung von Natriumpersulfat versetzt. Danach wurden 5 kg Methylmethacrylat zugegeben. Nach weiteren 2 Stunden wurden noch 0,15 kg Emulgator hinzugefügt.

Das Pfropfpolymerisat wurde durch Sprühtrocknung gewonnen.

Beispiel 2

Eine Mischung aus 48 kg Wasser, 0,6 kg Emulgator (s. BSp. 1), 0,005 kg Natriumpyrophospat und 0.02 kg Natriumbicarbonat wurde unter Rühren auf 75 °C erhitzt und mit 0,72 kg einer 7 gew.-%igen wäßrigen Lösung von Natriumpersulfat versetzt. Anschließend wurde die Temperatur auf 80 °C erhöht und innerhalb von 30 min. ein Gemisch aus 8,3 kg Styrol und 0,47 kg Butandiol-1,4-diacrylat zugegeben, worauf 90 min. bei 80 °C polymerisiert wurde.

Danach wurden 20 Gew.-% einer Mischung aus 43,6 kg Wasser, 0,44 kg Emulgator (s.o.), 0,024 kg Natriumpyrophosphat, 0,1 kg Natriumbicarbonat, 9,3 kg Styrol, 0,5 kg Butandiol-1,4-diacrylat und 41,4 kg Butadien sowie 0,72 kg einer 7 gew.-%igen wäßrigen Lösung von Natriumpersulfat zugegeben.

Nach 15 min. wurden die restlichen 80 Gew.-% der oben beschriebenen Mischung und 1,92 kg einer 7 gew.-%igen wäßrigen Lösung von Natriumpersulfat innerhalb von 4,5 Stunden bei 80 °C zugegeben.

Danach wurde das Reaktionsgemisch 4 Stunden lang auf 80 °C gehalten und dann mit 0,5 kg Emulgator (s.o.), 18 kg Wasser und 1,2 kg einer 7 gew.-%igen wäßrigen Lösung von Natriumpersulfat versetzt. Anschließend wurde eine Mischung aus 17,5 kg Styrol, 6 kg Acrylnitril, 9,1 kg Butylacrylat, 2,1 kg Methylmethacrylat und 0,35 kg Butandiol-1,4-diacrylat innerhalb von 2 Stunden zugegeben. Das Reaktionsgemisch wurde weitere zwei Stunden bei 80 °C gehalten und dann mit 0,24 kg einer 7 gew.-%igen wäßrigen Lösung von Natriumpersulfat sowie 5 kg Methylmethacrylat versetzt. Nach weiteren zwei Stunden wurden noch 0,15 kg Emulgator zugesetzt. Die Aufarbeitung erfolgte wie unter Beispiel 1.

Herstellung von thermoplastischen Formmassen

90 g PVC, K-Wert 57

10 g Pfropfpolymerisat (Bsp. 1, 2)

1 g Stabilisator

wurden bei 165 °C 8 min lang in einem Walzwerk gemischt. Die so erhaltenen Mischungen wurden bei 170 °C unter folgenden Bedingungen zu Platten gepreßt:

5

| 10 min | vorheizen | bei 1 bar |
|--------|-----------|-------------|
| 3 min | pressen | bei 50 bar |
| 2 min | pressen | bei 200 bar |
| 5 min | kühlen | bei 200 bar |

Die Streulichtwerte wurden an 4 mm dicken Preßplatten mit der Ulbricht-Kugel ermittelt. Die Beurteilung der Opaleszenz erfolgte visuell. Die Doppel-V-Schlagzähigkeit wurde an Normkleinstäben mit einem Kerbradius von 0,5 mm nach DIN 53 753 ermittelt.

Für die Streulichtmessung und die Doppel-V-Schlagzähigkeitsmessung wurden Formkörper verwendet, die einen der üblichen Zinnstabilisatoren enthielten (Di-n-octylzinn-bis-thioglycolsäureisooctylester). Für die Beurteilung der Opaleszenz wurden Preßplatten, die einen Calcium-Zink-Stabilisator (Mischung aus Calciumbehenat und Zinkstearat) enthielten, verwendet.

Ergebnisse siehe Tabelle I.

Die Messung der Izod-Schlagzähigkeit nach ISO 180/1A erfolgte an Probekörpern, die ebenfalls PVC mit K-Wert 57, Pfropfpolymerisate nach Bsp. 1 bzw. 2 und einen Zinnstabilisator enthielten. Es wurde eine Konzentrationsreihe hergestellt, bei der die Mischungsverhältnisse Pfropfpolymerisat/PVC im Bereich von 1 : 5,5 bis 1 : 13,5 (Gew.-Teile) lagen.

Zum einen wurde die Schlagzähigkeit ermittelt, zum anderen die Konzentration bei der ein Übergang vom Sprödbruch zum Teilbruch stattfand.

Ergebnisse siehe Tabelle II.

Tabelle I

| Bsp. | Teilchengröße nach Stufe A | Streulicht % | Opaleszenz | Doppel-V-Schlagzähigkeit | | |
|------|---------------------------|-------------|------------|--------------------------|-------|--------|
| | | | | 23°C | 0°C | -10°C |
| | [nm] | | | | [kJ/m²] | |
| 1 | 45 | 9,6 | nein | 91 | 54 | 48 |
| 2 | 35 | 6,0 | nein | 87 | 57 | 48 |

Tabelle II

| Bsp. | Izod n. ISO 180/1A [kJ/m²] | | | | Izod-Spröd-Zäh-übergang [%]* |
|---|---|---|---|---|---|
| | 7,0 %** | 8,5 %** | 10,0 %** | 11,5 %** | |
| 1 | 16,6 | 36,1 (3T) | 90,6 (10T) | 95,3 (10T) | 8,5 |
| 2 | 11,8 | 15,9 (10T) | 54,6 (10T) | 57,8 (10T) | 9,0 |

* Gew.-% Pfropfpolymerisat

Die angegebenen Werte sind Mittelwerte von jeweils 10 Messungen. 10T bedeutet, daß alle Proben teilgebrochen waren, 3T entsprechend, daß 3 Proben teilgebrochen waren.

* Gew.-% Pfropfpolymerisat

**Patentansprüche**
**Patentansprüche für folgende Vertragsstaaten : BE, DE, FR, GB, IT, NL**

1. Pfropfpolymerisate, erhältlich durch

A. Emulsionspolymerisation von 5 bis 20 Gew.-% eines Monomerengemischs, bestehend aus

$a_1$) 80-100 Gew.-% Styrol oder dessen kernsubstituierten Derivaten (Monomere I)

$a_2$) 0-20 Gew.-% eines $C_1$-$C_{12}$-Alkylesters der Acrylsäure oder der Methacrylsäure oder eines $\alpha,\beta$-ungesättigten Nitrils (Monomere II)

$a_3$) 0-10 Gew.-% eines bi- oder polyfunktionellen Monomeren (Monomeren III) und

$a_4$) 0-5 Gew.-% weiterer radikalisch polymerisierbarer Monomere (Monomere IV),

wobei sich die Gew.-%e $a_1$) - $a_4$) auf die Gesamtmenge (= 100 %) der in Stufe A eingesetzten Monomeren beziehen,

8

mit der Maßgabe, daß der mittlere Teilchendurchmesser der so erzeugten Latexteilchen 50 nm nicht überschreitet,

B. anschließende Pfropfpolymerisation von 35 bis 65 Gew.-% eines Monomerengemischs aus

$b_1$) 75-90 Gew.-% eines konjugierten Diens (Monomere V)

$b_2$) 10-25 Gew.-% der Monomeren I und/oder II

$b_3$) 0-10 Gew.-% Monomere III

$b_4$) 0-5 Gew.-% Monomere IV,

wobei sich die Gew.-% $b_1$) - $b_4$) auf die Gesamtmenge (= 100 %) der in Stufe B eingesetzten Monomeren bezieht,

C. anschließende Pfropfpolymerisation von:

C/1: 30 bis 50 Gew.-% eines Monomerengemischs aus

$c_1$) 35-65 Gew.-% der Monomeren I

$c_2$) 10-25 Gew.-% eines $\alpha,\beta$-ungesättigten Nitrils (Monomere II c)

$c_3$) 25-50 Gew.-% mindestens je eines Monomers aus der Gruppe der $C_1$-$C_{12}$-Alkylester der Acrylsäure (Monomere IIa) und je eines Monomers aus der Gruppe der $C_1$-$C_{12}$-Alkylester der Methacrylsäure (Monomere II b) und

$c_4$) 0-10 Gew.-% der Monomeren III

wobei sich die Gew.-% $c_1$) - $c_4$) auf die Gesamtmenge (= 100 %) der in Stufe C/1) eingesetzten Monomere beziehen,

oder

C/2: 30-50 Gew.-% eines Monomerengemischs aus

$c_5$) 35-65 Gew.-% Monomere I

$c_6$) 10-25 Gew.-% Monomere IIc)

$c_7$) 15-40 Gew.-% mindestens je eines Monomers IIa und eines Monomers IIb

$c_8$) 0-10 Gew.-% eines Monomers III

in der 1. Stufe und

$c_9$) 5-25 Gew.-% eines Monomers IIb, sowie

$c_{10}$) 0- 2 Gew.-% Monomere III

in der 2. Stufe,

wobei sich die Gew.-% $c_5$) - $c_{10}$) auf die Gesamtmenge (= 100 %) der in C/2) eingesetzten Monomere bezieht.

2. Verfahren zur Herstellung von Pfropfpolymerisaten gemäß Anspruch 1, dadurch gekennzeichnet, daß man es gemäß den dort genannten Maßnahmen durchführt.

3. Verwendung der Pfropfpolymerisate gemäß Anspruch 1 als Zusatzstoffe für Homo- oder Mischpolymerisate des Vinylchlorids zur Verbesserung der mechanischen Eigenschaften dieser Polymerisate.

4. Thermoplastische Formmassen, enthaltend 2-30 Gew.-% der Pfropfpolymerisate gemäß Anspruch 1.

5. Formkörper hergestellt aus thermoplastischen Formmassen gemäß Anspruch 4.

**Patentansprüche für folgenden Vertragsstaat : ES**

1. Verfahren zur Herstellung von Pfropfpolymerisaten, dadurch gekennzeichnet, daß man

A. 5 - 20 Gew.% eines Monomerengemisches, bestehend aus

$a_1$) 80-100 Gew.-% Styrol oder dessen kernsubstituierten Derivaten (Monomere I)

$a_2$) 0-20 Gew.-% eines $C_1$-$C_{12}$-Alkylesters der Acrylsäure oder der Methacrylsäure oder eines $\alpha,\beta$-ungesättigten Nitrils (Monomere II)

$a_3$) 0-10 Gew.-% eines bi- oder polyfunktionellen Monomeren (Monomeren III) und

$a_4$) 0-5 Gew.-% weiterer radikalisch polymerisierbarer Monomere (Monomere IV),

wobei sich die Gew.-%e $a_1$) - $a_4$) auf die Gesamtmenge (= 100 %) der in Stufe A eingesetzten Monomeren beziehen, in an sich bekannter Weise der Emulsionspolymerisation in der Weise unterwirft, daß der mittlere Teilchendurchmesser der so erzeugten Latexteilchen 50 mm nicht überschreitet, und

B. das so erhaltene Emulsionspolymerisat in Gegenwart von 35 - 65 Gew.% eines Monomerengemisches aus

$b_1$) 75-90 Gew.-% eines konjugierten Diens (Monomere V)

$b_2$) 10-25 Gew.-% der Monomeren I und/oder II

$b_3$) 0-10 Gew.-% Monomere III

$b_4$) 0-5 Ges.-% Monomere IV,

wobei sich die Gew.-% $b_1$) - $b_4$) auf die Gesamtmenge (= 100 %) der in Stufe B eingesetzten Monomeren bezieht,

der Emulsionspolymerisation unterwirft, und

C. das so erhaltene Pfropfpolymerisat anschließend in Gegenwart von

C/1: 30 bis 50 Ges.-% eines Monomerengemischs aus

c1) 35-65 Gew.-%der Monomeren I

c2) 10-25 Ges.-%eines $\alpha,\beta$-ungesättigten Nitrils (Monomere II c)

$c_3$) 25-50 Gew.-% mindestens je eines Monomers aus der Gruppe der $C_1$-$C_{12}$-Alkylester der Acrylsäure (Monomere IIa) und je eines Monomers aus der Gruppe der $C_1$-$C_{12}$-Alkylester der Methacrylsäure (Monomere II b) und

$c_4$) 0-10 Gew.-% der Monomeren III,

wobei sich die Gew.-% $c_1$) - $c_4$) auf die Gesamtmenge (= 100 %) der in Stufe C/1) eingesetzten Monomere beziehen,

oder

C/2: 30-50 Gew.-% eines Monomerengemischs aus

$c_5$) 35-65 Gew.-% Monomere I

$c_6$) 10-25 Gew.-% Monomere IIc)

$c_7$) 15-40 Gew.-% mindestens je eines Monomers IIa und eines Monomers IIb

$c_8$) 0-10 Gew.-% eines Monomers III

in der 1. Stufe und

$c_9$) 5-25 Gew.-% eines Monomers IIb, sowie

$c_{10}$) 0- 2 Gew.-% Monomere III

in der 2. Stufe,

wobei sich die Gew.-% $c_5$) - $c_{10}$) auf die Gesamtmenge (= 100 %) der in C/2) eingesetzten Monomere bezieht, einer weiteren Emulsionspolymerisation unterwirft.

2. Verfahren zur Verbesserung der mechanischen Eigenschaften von Homo- oder Mischpolymerisaten des Vinylchlorids, dadurch gekennzeichnet, daß man diesen Polymerisaten die Pfropfpolymerisate gemäß Anspruch 1 zusetzt.

3. Verfahren zur Herstellung von thermoplastischen Formmassen, dadurch gekennzeichnet, daß man solchen Formmassen 2 - 30 Gew.% der Pfropfpolymerisate gemäß Anspruch 1 zusetzt.

4. Verfahren zur Herstellung von Formkörpern, dadurch gekennzeichnet, daß man zu ihrer Herstellung thermoplastische Formmassen gemäß Anspruch 3 verwendet.

**Claims**

**Claims for the following Contracting States : BE, DE, FR, GB, IT, NL**

1. A graft polymer, obtainable by

A. emulsion polymerization of 5-20 % by weight of a monomer mixture consisting of

$a_1$) 80-100 % by weight of styrene or its derivatives substituted in the nucleus (monomers I),

$a_2$) 0-20 % by weight of a $C_1$-$C_{12}$-alkyl ester of acrylic acid or of methacrylic acid or of an $\alpha,\beta$-unsaturated nitrile (monomers II),

$a_3$) 0-10 % by weight of a bi- or polyfunctional monomer (monomers III) and

$a_4$) 0-5 % by weight of further monomers which can be subjected to free radical polymerisation (monomers IV), the percentages by weight $a_1$) - $a_4$) being based on the total amount (= 100 %) of the monomers used in stage A), with the proviso that the mean particle diameter of the latex particles thus produced does not exceed 50 nm,

B. subsequent graft polymerization of 35-65 % by weight of a monomer mixture of

$b_1$) 75-90 % by weight of a conjugated diene (monomers V),

$b_2$) 10-25 % by weight of the monomers I and/or II,

$b_3$) 0-10 % by weight of the monomers III and

$b_4$) 0-5 % by weight of the monomers IV,

the percentages by weight $b_1$) - $b_4$) being based on the total amount (= 100 %) of the monomers

10

EP 0 374 814 B1

used in stage B), and

C. subsequent graft polymerization of:

C/1: 30-50 % by weight of a monomer mixture of

$c_1$) 35-65 % by weight of the monomers I,

$c_2$) 10-25 % by weight of an $\alpha,\beta$-unsaturated nitrile (monomers IIc)

$c_3$) 25-50 % by weight of one or more monomers from the group consisting of the $C_1$-$C_{12}$-alkyl esters of acrylic acid (monomers IIa) and one or more monomers from the group consisting of the $C_1$-$C_{12}$-alkyl esters of methacrylic acid (monomers IIb) and

$c_4$) 0-10 % by weight of the monomers III, the percentages by weight $c_1$) - $c_4$) being based on the total amount (= 100 %) of the monomers used in C/1),

or

C/2: 30-50 % by weight of a monomer mixture of

$c_5$) 35-65 % by weight of monomers I,

$c_6$) 10-25 % by weight of monomers IIc),

$c_7$) 15-40 % by weight of one or more monomers IIa and one or more monomers IIb and

$c_8$) 0-10 % by weight of a monomer III in the first stage and

$c_9$) 5-25 % of a monomer IIb and

$c_{10}$) 0-2 % by weight of monomers III

in the second stage,

the percentages by weight $c_5$) - $c_{10}$) being based on the total amount (= 100 %) of the monomers used in C/2).

2. A process for the preparation of a graft polymer as claimed in claim 1, which is carried out according to the measures stated there.

3. Use of a graft polymer as claimed in claim 1 as an additive for a homo- or copolymer of vinyl chloride to improve the mechanical properties of said polymer.

4. A thermoplastic molding material containing 2-30 % by weight of a graft polymer as claimed in claim 1.

5. A molding produced from a thermoplastic molding material as claimed in claim 4.

**Claims for the following Contracting State : ES**

1. A process for the preparation of a graft polymer, wherein

A. 5-20 % by weight of a monomer mixture consisting of

$a_1$) 80-100 % by weight of styrene or its derivatives substituted in the nucleus (monomers I),

$a_2$) 0-20 % by weight of a $C_1$-$C_{12}$-alkyl ester of acrylic acid or of methacrylic acid or of an $\alpha,\beta$-unsaturated nitrile (monomers II),

$a_3$) 0-10 % by weight of a bi- or polyfunctional monomer (monomers III) and

$a_4$) 0-5 % by weight of further monomers which can be subjected to free radical polymerization (monomers IV),

the percentages by weight $a_1$) - $a_4$) being based on the total amount (= 100 %) of the monomers used in stage A), are subjected to emulsion polymerization in a conventional manner in such a way that the mean particle diameter of the latex particles thus produced does not exceed 50 nm,

B. the emulsion polymer thus obtained is subjected to emulsion polymerization in the presence of 35-65 % by weight of a monomer mixture of

$b_1$) 75-90 % by weight of a conjugated diene (monomers V),

$b_2$) 10-25 % by weight of the monomers I and/or II,

$b_3$) 0-10 % by weight of the monomers III and

$b_4$) 0-5 % by weight of the monomers IV,

the percentages by weight $b_1$) - $b_4$) being based on the total amount (= 100 %) of the monomers used in stage B), and

C. the graft polymer thus obtained is then subjected to a further emulsion polymerization in the presence of

C/1: 30-50 % by weight of a monomer mixture of

$c_1$) 35-65 % by weight of the monomers I,

$c_2$) 10-25 % by weight of an $\alpha,\beta$-unsaturated nitrile (monomers IIc)

11

$c_3$) 25-50 % by weight of one or more monomers from the group consisting of the $C_1$-$C_{12}$-alkyl esters of acrylic acid (monomers IIa) and one or more monomers from the group consisting of the $C_1$-$C_{12}$-alkyl esters of methacrylic acid (monomers IIb) and

$c_4$) 0-10 % by weight of the monomers III

the percentages by weight $c_1$) - $c_4$) being based on the total amount (= 100 %) of the monomers used in C/1), or

C/2: 30-50 % by weight of a monomer mixture of

$c_5$) 35-65 % by weight of monomers I,

$c_6$) 10-25 % by weight of monomers IIc),

$c_7$) 15-40 % by weight of one or more monomers IIa and one or more monomers IIb and

$c_8$) 0-10 % by weight of a monomer III in the first stage and

$c_9$) 5-25 % of a monomer IIb and

$c_{10}$) 0-2 % by weight of monomers III

in the second stage, the percentages by weight $c_5$) - $c_{10}$) being based on the total amount (= 100 %) of the monomers used in C/2).

**2.** A process for improving the mechanical properties of a homo- or copolymer of vinyl chloride, which comprises adding thereto a graft polymer as claimed in claim 1.

**3.** A process for the production of a thermoplastic molding material, which comprises adding thereto 2-30 % by weight of a graft polymer as claimed in claim 1.

**4.** A process for the production of a molding, which comprises using a thermoplastic molding material as claimed in claim 3.

**Revendications**
**Revendications pour les Etats contractants suivants : BE, DE, FR, GB, IT, NL**

**1.** Polymères greffés, que l'on obtient par les opérations suivantes :

A. Polymérisation en émulsion de 5 à 20 % en poids d'un mélange de monomères comprenant

$a_1$) 80 à 100 % en poids de styrène ou de ses dérivés substitués sur le noyau (monomère I),

$a_2$) 0 à 20 % en poids d'un ester alkylique en $C_1$-$C_{12}$ de l'acide acrylique ou de l'acide méthacrylique, ou d'un nitrile à insaturation $\alpha,\beta$ (monomère II),

$a_3$) 0 à 10 % en poids d'un monomère bi- ou polyfonctionnel (monomère III) et

$a_4$) 0 à 5 % en poids d'autres monomères polymérisables par polymérisation radicalaire (monomère IV),

les pourcentages en poids $a_1$) à $a_4$) se rapportant à la quantité totale (100 %) des monomères utilisés dans l'étape A,

de telle sorte que la granulométrie moyenne des particules de latex ainsi obtenues ne dépasse pas 50 nm,

B. puis polymérisation par greffage de 35 à 65 % en poids d'un mélange de monomères comprenant :

$b_1$) 75 à 90 % en poids d'un diène conjugué (monomère V),

$b_2$) 10 à 25 % en poids des monomères I et/ou II,

$b_3$) 0 à 10 % en poids du monomère III,

$b_4$) 0 à 5 % en poids du monomère IV,

les pourcentages en poids $b_1$) à $b_4$) se rapportant à la quantité totale (100 %) des monomères utilisés dans l'étape B,

C. puis polymérisation par greffage

C/1 : de 30 à 50 % en poids d'un mélange de monomères comprenant :

$c_1$) 35 à 65 % en poids des monomères I,

$c_2$) 10 à 25 % en poids d'un nitrile à insaturation $\alpha, \beta$ (monomère II c),

$c_3$) 25 à 50 % en poids d'au moins un monomère choisi dans le groupe des esters alkyliques en $C_1$-$C_{12}$ de l'acide acrylique (monomère II a) et d'au moins un monomère choisi dans le groupe des esters alkyliques en $C_1$-$C_{12}$ de l'acide méthacrylique (monomère II b) et

$c_4$) 0 à 10 % en poids des monomères III, les pourcentages en poids $c_1$) à $c_4$) se rapportant à la quantité totale (100 %) des monomères utilisés dans l'étape C/1,

ou

C/2 : de 30 à 50 % en poids d'un mélange de monomères comprenant

$c_5$) 35 à 65 % en poids du monomère I,

$c_6$) 10 à 25 % en poids du monomère IIc),

$c_7$) 15 à 40 % en poids d'au moins un monomère IIa et d'un monomère IIb,

$c_8$) 0 à 10 % en poids d'un monomère III dans la 1ère étape, et

$c_9$) 5 à 25 % en poids d'un monomère IIb, et

$C_{10}$) 0 à 2 % en poids du monomère III

dans la 2ème étape,

les pourcentages en poids $c_5$) à $c_{10}$) se rapportant à la quantité totale (100 %) des monomères utilisés en C/2.

2. Procédé pour préparer des polymères greffés selon la revendication 1, caractérisé en ce qu'il est mis en oeuvre selon les modes opératoires qui y sont mentionnés.

3. Utilisation des polymères greffés selon la revendication 1, en tant qu'additifs pour homo- ou copolymères du chlorure de vinyle, pour améliorer les propriétés mécaniques de ces polymères.

4. Mélanges à mouler thermoplastiques contenant de 2 à 30 % en poids des polymères greffés selon la revendication 1.

5. Objets moulés, fabriqués à partir de mélanges à mouler thermoplastiques selon la revendication 4.

**Revendications pour l'Etat contractant suivant : ES**

1. Procédé pour préparer des polymères greffés, caractérisé en ce qu'on soumet, d'une manière déjà connue, à une polymérisation en émulsion

A. de 5 à 20 % en poids d'un mélange de monomères comprenant

$a_1$) 80 à 100 % en poids de styrène ou de ses dérivés substitués sur le noyau (monomère I),

$a_2$) 0 à 20 % en poids d'un ester alkylique en $C_1$-$C_{12}$ de l'acide acrylique ou de l'acide méthacrylique, ou d'un nitrile à insaturation $\alpha,\beta$ (monomère II),

$a_3$) 0 à 10 % en poids d'un monomère bi- ou polyfonctionnel (monomère III) et

$a_4$) 0 à 5 % en poids d'autres monomères polymérisables par polymérisation radicalaire (monomère IV),

les pourcentages en poids $a_1$) à $a_4$) se rapportant à la quantité totale (100 %) des monomères utilisés dans l'étape A, de telle sorte que la granulométrie moyenne des particules de latex ainsi obtenues ne dépasse pas 50 mm, et

B. on soumet à la polymérisation en émulsion le polymère en émulsion ainsi obtenu, en présence de 35 à 65 % en poids d'un mélange de monomères comprenant :

$b_1$) 75 à 90 % en poids d'un diène conjugué (monomère V),

$b_2$) 10 à 25 % en poids des monomères I et/ou II,

$b_3$) 0 à 10 % en poids du monomère III,

$b_4$) 0 à 5 % en poids du monomère IV,

les pourcentages en poids $b_1$) à $b_4$) se rapportant à la quantité totale (100 %) des monomères utilisés dans l'étape B, puis

C. on soumet à une autre polymérisation en émulsion le polymère greffé ainsi obtenu, en présence

C/1 : de 30 à 50 % en poids d'un mélange de monomères comprenant :

$c_1$) 35 à 65 % en poids des monomères I,

$c_2$) 10 à 25 % en poids d'un nitrile à insaturation $\alpha$, $\beta$ (monomère II c),

$c_3$) 25 à 50 % en poids d'au moins un monomère choisi dans le groupe des esters alkyliques en $C_1$-$C_{12}$ de l'acide acrylique (monomère II a) et d'au moins un monomère choisi dans le groupe des esters alkyliques en $C_1$-$C_{12}$ de l'acide méthacrylique (monomère II b) et

$c_4$) 0 à 10 % en poids des monomères III, les pourcentages en poids $c_1$) à $c_4$) se rapportant à la quantité totale (100 %) des monomères utilisés dans l'étape C/1,

ou

C/2 : de 30 à 50 % en poids d'un mélange de monomères comprenant

$c_5$) 35 à 65 % en poids du monomère I,

$c_6$) 10 à 25 % en poids du monomère IIc),

$c_7$) 15 à 40 % en poids d'au moins un monomère IIa et d'un monomère IIb,

13

EP 0 374 814 B1

$c_8$) 0 à 10 % en poids d'un monomère III dans la 1ère étape, et

$c_9$) 5 à 25 % en poids d'un monomère IIb, et

$c_{10}$) 0 à 2 % en poids du monomère III

dans la 2ème étape,

les pourcentages en poids $c_5$) à $c_{10}$) se rapportant à la quantité totale (100 %) des monomères utilisés en C/2.

2. Procédé pour améliorer les propriétés mécaniques d'homo- ou de copolymères du chlorure de vinyle, caractérisé en ce qu'on ajoute, à ces polymères, les polymères greffés selon la revendication 1.

3. Procédé pour fabriquer des mélanges à mouler thermoplastiques, caractérisé en ce qu'on ajoute à ces mélanges à mouler de 2 à 30 % en poids des polymères greffés selon la revendication 1.

4. Procédé pour fabriquer des objets moulés, caractérisé en ce qu'on utilise pour les fabriquer des mélanges à mouler thermoplastiques selon la revendication 3.